# EUROPÄISCHE PATENTSCHRIFT

(11) **EP 1 228 269 B1**
(45) Veröffentlichungstag und Bekanntmachung des Hinweises auf die Patenterteilung: **05.01.2005**
(21) Anmeldenummer: 99952217.0
(22) Anmeldetag: 11.11.1999
(51) Int. Cl.: D03D 1/00, D03J 1/08, B65H 45/28, B65H 45/22

(54) **VERFAHREN UND EINRICHTUNG ZUM HERSTELLEN VON ETIKETTEN**
METHOD AND DEVICE FOR PRODUCING LABELS
PROCEDE ET DISPOSITIF DE PRODUCTION D'ETIQUETTES

(43) Veröffentlichungstag der Anmeldung: 07.08.2002
(73) Patentinhaber: TEXTILMA AG, 6052 Hergiswil / NW (CH)
(72) Erfinder: SPEICH, Francisco, CH-5073 Gipf-Oberfrick (CH)
(74) Vertreter: Schmauder, Klaus Dieter
(86) Internationale Anmeldenummer: PCT/CH1999/000533
(87) Internationale Veröffentlichungsnummer: WO 2001/034888

(56) Entgegenhaltungen:
- EP-A- 0 389 793
- DE-A- 4 115 800
- GB-A- 2 028 774

## Beschreibung

Die Erfindung betrifft ein Verfahren zum Herstellen von Etiketten in einem aus schmelzfähigen Fadenmaterial erzeugten Breitgewebe in der Gewebetechnik mit einem Grundschuss und mehreren Stickschüssen für die Figur, wobei das Breitgewebe nach dem Weben mittels ersten Schneidvorrichtungen unter Bildung einer in Kettrichtung verlaufenden ersten Schneidkante in eine Schar nebeneinander liegender Bändern getrennt wird und wobei für jedes Band eine Vorratsrollen erzeugt wird.

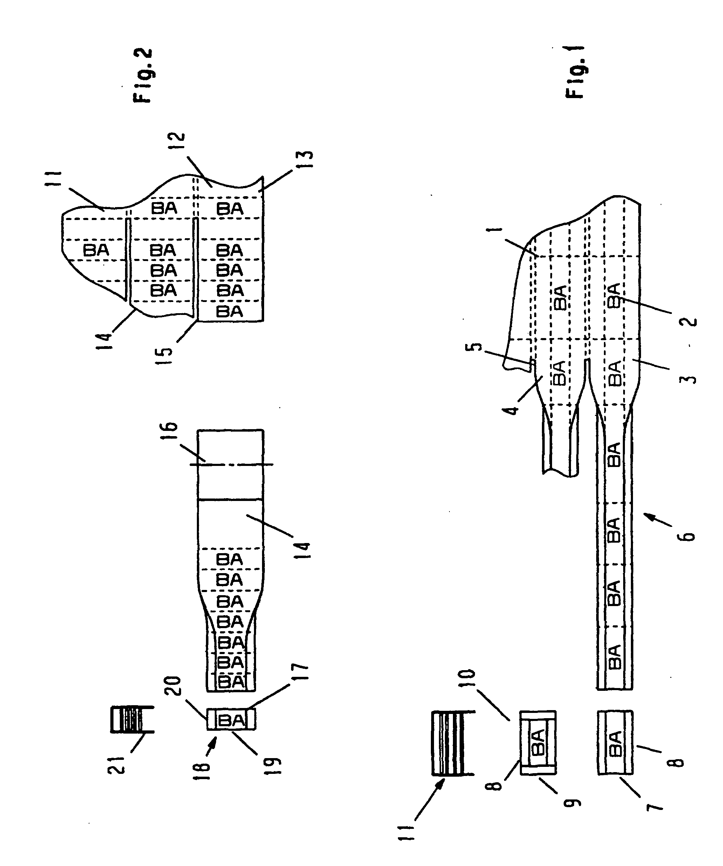

In der EP-A-0 389 793 wird ein Verfahren zur Herstellung von Etiketten beschrieben, die in einem Breitgewebe 1 aus schmelzfähigen Garnen gewoben werden, wobei das Gewebe aus einem Grundgewebe und über die gesamte Bahnbreite geführte Stickschüsse besteht, welche die Figur 2 des Etiketts bilden, wobei das Gewebe eine Mehrzahl von Streifen 3 mit Figuren 2 aufweist, welche in Kettrichtung ausgerichtet sind. Unmittelbar nach dem Weben wird an der Webmaschine die Textilbahn in Kettrichtung verlaufende Bänder 4 unter Bildung einer ersten Schneidkante 5 geschnitten. Nachfolgend werden diese Schneidkanten 5, weil diese Brauen aufweisen, entweder in separaten Vorrichtungen oder direkt an der Webmaschine gefaltet, durch Wärmebehandlung fixiert und als Etikettenband 6 abgezogen. Die Bänder werden später in einem separaten verfahren unter Bildung einer zweiten Schneidkante 7 geschnitten, so dass an den Längsseiten 8 gefaltete Vorprodukte entstehen. Diese Vorprodukte werden an den zu den ersten Schneidkanten 5 quer verlaufenden zweiten Schneidkanten 7 gefaltet, so dass gebrauchsfertige, an den Längsseiten 8 und Querseiten 9 gefaltete Etiketten 10 entstehen, welche in einen Behälter 11 verpackt werden, wie dies in Fig.1 dargestellt ist.

Dieses Verfahren hat im Wesentlichen die Nachteile, dass die zur Herstellung der Etiketten erforderlichen Vorrichtungen in die Webmaschine integriert sind, so dass das Handling erschwert wird, dass die Webmaschine bei Störungen in den Vorrichtungen oder die Vorrichtungen bei Störungen in der Webmaschine still gesetzt werden muss bzw. müssen, so dass die Produktivität vermindert wird, dass der bei der Herstellung entstehende Rauch bzw. die sich entwickelnden Dämpfe ungehindert frei gesetzt wird bzw. werden, so dass die Arbeitsbedingungen im Bereich der Webmaschine beeinträchtigt werden und dass die so gefalteten Etiketten an sämtlichen, d.h. vier Kanten eine Faltung aufweisen, wodurch diese starr, dick und unhandlich wirken.

Der Erfindung liegt die Aufgabe zugrunde ein Verfahren zum Herstellen von Etiketten zu verbessern.

Diese Aufgabe wird erfindungsgemäss durch die Merkmale der Ansprüche 1 und 2 gelöst.

Die Vorteile der Erfindung sind in der Automatisierung der Herstellung, der daraus folgenden vereinfachten Bedienung, der kostengünstigen Herstellung der Etiketten aber auch in den verbesserten Arbeitsbedingungen sowie die Verbessete und verfeinerte Kantenqualität der so hergestellten Etiketten zu sehen. Dadurch, dass die Figur der Etiketten bzw. die zweite Schneidkante 19 in Schussrichtung ausgerichtet ist, wird das Band lediglich entlang den ersten Schneidkanten gefaltet und durch das Grundgewebe geschnitten, so dass gebrauchsfertige Etiketten entstehen. Dadurch wird das Verfahren und damit die Einrichtung in vorteilhafter Weise vereinfacht.

Eine Einrichtung zur Durchführung des Verfahrens ist erfindungsgemäss durch die Merkmale der Ansprüche 10 und 11 gekennzeichnet.

Die Erfindung wird anhand der beiliegenden Zeichnungen erläutert.

Es zeigen:
- Fig.1: Eine schematische Darstellung eines aus der EP 0 389 793 bekannten Verfahrens zur Herstellung von Etiketten;
- Fig.2: eine schematische Darstellung einer Ausführung eines erfindungsgemässen Verfahrens zur Herstellung von Etiketten;
- Fig.3: eine schematisch dargestellte erste Ausführung einer Einrichtung zum Herstellen von Etiketten;
- Fig.4: eine schematisch dargestellte zweite Ausführung einer Einrichtung zum Herstellen von Etiketten;
- Fig.5: eine schematisch dargestellte dritte Ausführung einer Einrichtung zum Herstellen von Etiketten;
- Fig.6: eine schematisch dargestellte vierte Ausführung einer Einrichtung zum Herstellen von Etiketten;
- Fig.7: eine Ansicht einer Vorrichtung zum Falten eines Bandes mit Etiketten;
- Fig.8: eine Ansicht in Richtung des Pfeiles A in Fig.7;
- Fig.9: einen Schnitt entlang der Linie VI;-VII in Fig.7;
- Fig.10: einen Schnitt entlang der Linie VIII-VIII in Fig.7;
- Fig.11: einen Schnitt entlang der Linie IX-IX in Fig.7;
- Fig.12: eine schematische Darstellung einer Ausführung einer zweiten Schneidvorrichtung;
- Fig.13: eine schematische Darstellung einer anderen Ausführung einer zweiten Schneidvorrichtung;
- Fig.14: eine schematische Darstellung einer Ausführung einer Vorrichtung zum Kontrollieren und Ausrichten des Bandes mit Etiketten und
- Fig.15: Eine Ansicht in Richtung des Pfeiles A in Fig.12.

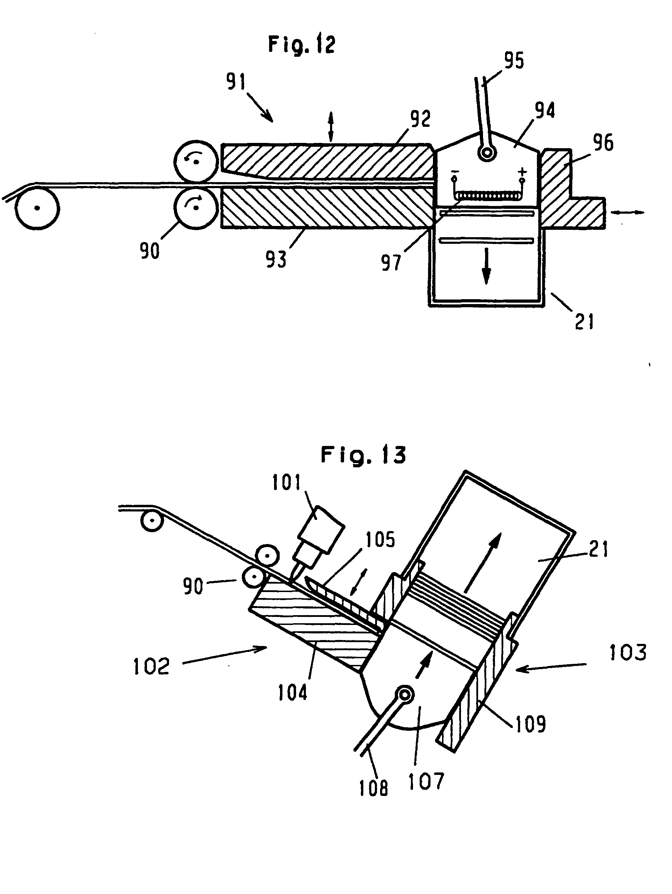

Zur Herstellung der Etiketten wird ein Breitgewebe 11 gewoben, das aus einem Grundgewebe und über die gesamte Bahnbreite geführte Stickschüsse besteht, welche die Figur 12 bilden, wobei das Gewebe eine Mehrzahl von Streifen 13 mit Figuren 12 aufweist, welche in Schussrichtung ausgerichtet sind. Unmittelbar nach dem Weben wird an der Webmaschine die Textilbahn in Kettrichtung verlaufende Bänder 14 unter Bildung einer ersten Schneidkante 15 geschnitten, Die Bänder werden jeweils auf eine Vorratsrolle 16 aufgewickelt.

Wie die Fig.2 zeigt wird bei dem hier in Rede stehenden Verfahren wird online das Band 14 von der Vorratsrolle 16 abgezogen, weil die ersten Schneidkanten 15 Brauen aufweisen wird anschliessend das Band 14 entlang den ersten Schneidkanten 15 gefaltet und nachfolgend unter Bildung einer zweiten Schneidkante 17 geschnitten, so dass gebrauchsfertige Etiketten 18 mit ungefalteter Längsseite 19 und gefalteter Schmalseite 20 erzeugt werden, die in einem Behälter 21 verpackt werden. Weitere Ausführungen des Verfahrens werden in der nachfolgenden Beschreibung in Zusammenhang mit den Ausführungsformen erfindungsgemässer Einrichtungen beschrieben. Es wird darauf hingewiesen, dass auch ungefaltete Etiketten und Etiketten mit einer Mittelfalte mit dem vorstehend beschriebenen Verfahren und den nachfolgend beschriebenen Einrichtungen bei Umgehung des Faltvorgangs hergestellt werden können.

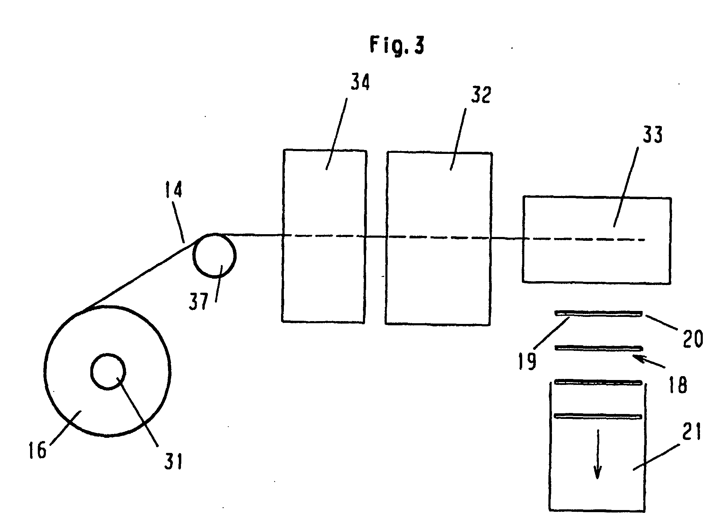

Die Einrichtung nach Fig.3 besteht im Wesentlichen, aus einer Aufnahme 31 für die Vorratsrolle 16, einer Vorrichtung 32 zum Appretieren und einer ersten Ausführung einer Schneidvorrichtung 33, die in einem nicht dargestellten Gestell online, d.h. eine kontinuierliche Produktionslinie bildend angeordnet sind. Mit Vorteil wird eine Vorrichtung 34 zum Ausrichten und Kontrollieren der Etiketten vorgesehen.

Mittels einer nicht dargestellten Abzugseinheit wird das die ersten Schneidkanten 15 aufweisende Band 14 von der Vorratsrolle 16 abgezogen, über eine Umlenkrolle 37 geführt, durch die Vorrichtung 34 gezogen, um die Figur 12 zu kontrollieren und das Band 14 für das Schneiden auszurichten, durch die Vorrichtung 32 zum Appretieren gefördert und in die Schneidvorrichtung 33 eingeführt, in welcher die Etiketten 18 unter Bildung der zweiten Schneidkante 19 vom Band 14 abgetrennt und anschliessend in den Behälter 21 verpackt werden. Es wird darauf hingewiesen, dass die Vorrichtung 34 zum Ausrichten und Kontrollieren der Etiketten unmittelbar vor der Schneidvorrichtung 33 angeordnet werden kann.

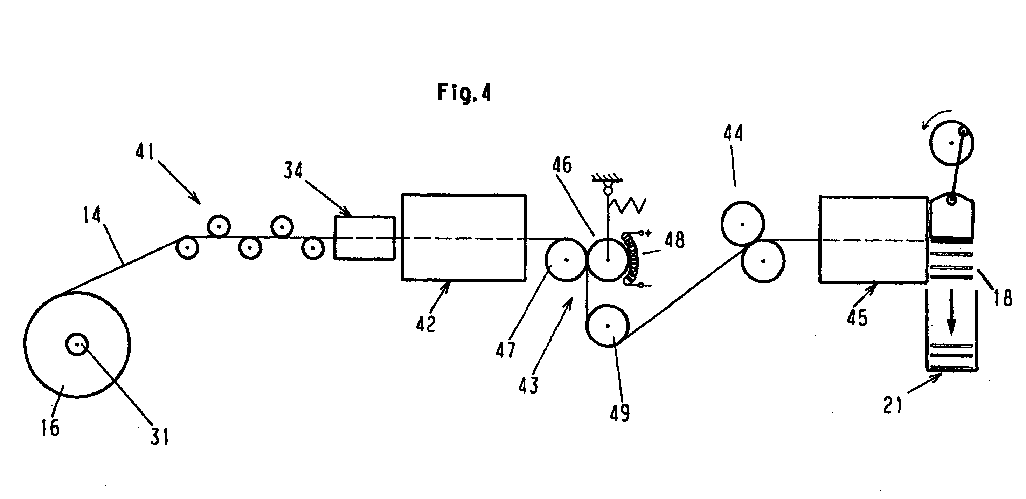

Die Einrichtung nach Fig.4 umfasst online die Aufnahme 31 für die Vorratsrolle 16, eine Rollenanordnung 41 zum Führen des Bandes 14, die Vorrichtung 34 zum Kontrollieren der Figur 12 und Ausrichten des Bandes 14, eine Vorrichtung 42 zum Falten des Bandes 14, eine Vorrichtung 43 zum Fixieren der Falten, einen Bandförderer 44, eine zweite Ausführung einer Schneidvorrichtung 45, welche das Etikett 18 unter Bildung der zweiten Schneidkante 19 vom gefalteten Band abtrennt und die Etiketten 18 in einen Behälter 21 verpackt.

Die Vorrichtung 43 zum Fixieren enthält eine unter Federwirkung stehenden Druckrolle 46 und einer Gegenrolle 47, wobei mit Vorteil ein Heizelement 48 vorgesehen wird. Ferner ist eine Umlenkrolle 49 für das gefaltete Band vorgesehen.

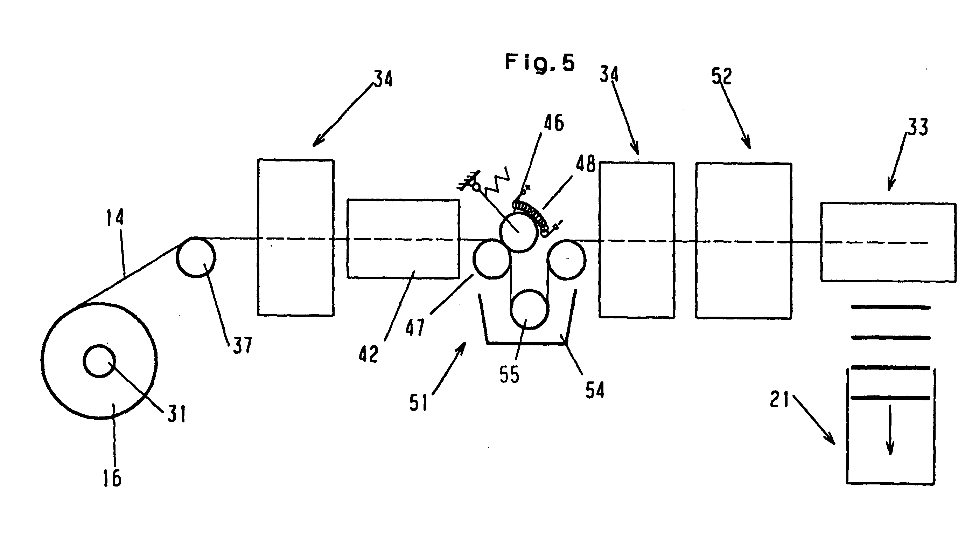

Die in Fig.5 gezeigte Einrichtung enthält online eine Aufnahme 31 für die Vorratsrolle 16, eine Umlenkrolle 37 für das Band 14, eine erste Vorrichtung 34 zum Kontrollieren der Figur 12 und Ausrichten des Bandes 14, eine Vorrichtung 42 zum Falten des Bandes 14, eine zweite Vorrichtung 34 zum Kontrollieren der Figur 12 und Ausrichten des gefalteten Bandes, eine Vorrichtung 51 zum Fixieren der Falten, eine Vorrichtung 52 zum Trocknen und Thermofixieren des gefalteten Bandes, eine erste Ausführung einer Vorrichtung 33 zum Schneiden des gefalteten Bandes und zum Verpacken der gebrauchsfertigen Etiketten 18 in einen Behälter 21.

Bei dieser Einrichtung enthält die Vorrichtung 51 zum Fixieren und Appretieren der Falten zusätzlich zur unter Federwirkung stehenden Druckrolle 46 und Gegenrolle 47 sowie Heizelement 48 ein Appretierbad 54 mit einer Umlenkrolle 55, um das gefaltete Band durch das Appretierbad zu leiten.

Mittels einer nicht dargestellten Abzugvorrichtung, die mit Vorteil online vor der Schneidvorrichtung 33 angeordnet ist wird das Band 14 von der Vorratsrolle 16 abgezogen, über die Umlenkrolle 37 geführt und durch die online angeordneten, vorstehend erwähnten Vorrichtungen 34,42, 51,34,52 gezogen und in die Schneidvorrichtung 33 gefördert.

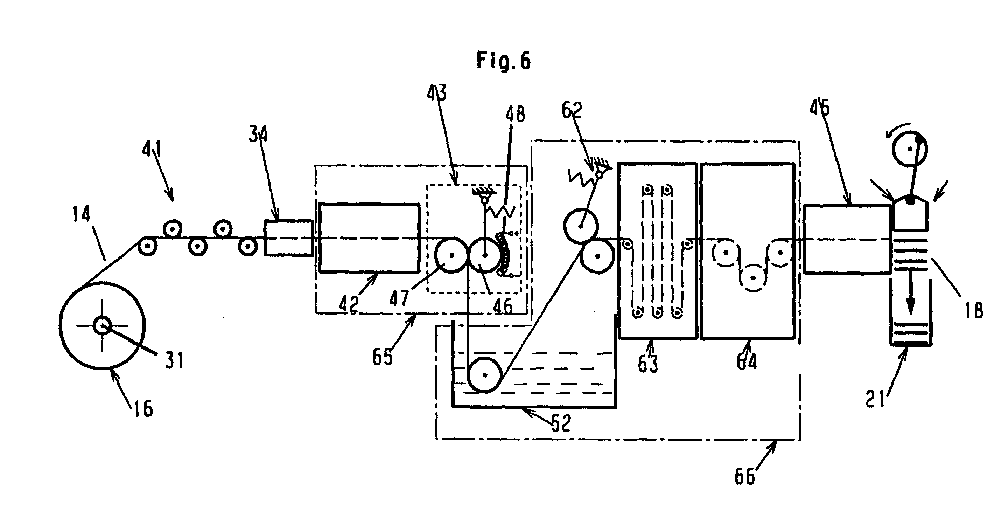

Die in Fig.6 gezeigte Einrichtung weist online eine Aufnahme 31 für die Vorratsrolle16, eine Rollenanordnung 41 für das Band 14, eine Vorrichtung 34 zum Kontrollieren der Figur 12 und Ausrichten des Bandes 14, eine Vorrichtung 42 zum Falten des Bandes 14, eine Vorrichtung 43 zum Fixieren der Falten, eine Vorrichtung 52 zum Appretieren des gefalteten Bandes eine Abzugvorrichtung 62 für das gefaltete Band, eine Vorrichtung 63 zum Trocknen des gefalteten Bandes, eine Vorrichtung 64 zum Thermofixieren des gefalteten Bandes und eine zweite Ausführung einer Schneidvorrichtung 45, welche das Etikett 18 unter Bildung der zweiten Schneidkante 19 vom gefalteten Band abtrennt und die Etiketten 18 in einen Behälter 21 verpackt.

Bei dieser Einrichtung sind die Faltvorrichtung und die Vorrichtung zum Fixieren der Falten zu einer ersten Baueinheit 65 und die Vorrichtung zum Appretieren, die Abzugvorrichtung, die Vorrichtung zum Trocknen des gefalteten Bandes und die Vorrichtung zum Thermofixieren des gefalteten Bandes zu einer zweiten Baueinheit 66 zusammengefasst.

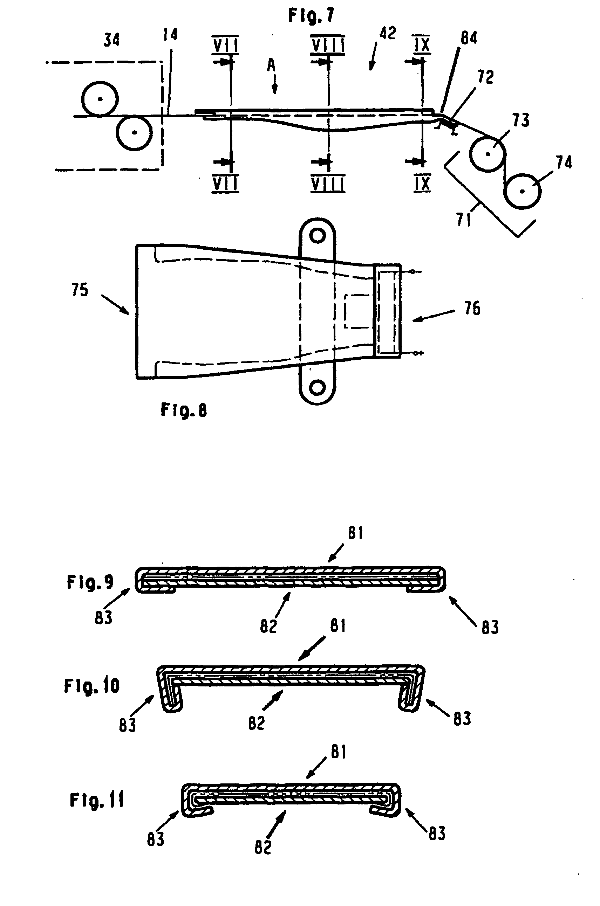

Es wird auf die Figuren 7 und 11 Bezug genommen, welche eine Ausführung der Faltvorrichtung 32 mit integrierter Vorrichtung 71 zum Fixieren der Falten zeigen. Wie die Fig.7 zeigt wird das Band 14 aus der Vorrichtung 34 zum Kontrollieren der Figur 12 und Ausrichten des Bandes der Faltvorrichtung 32 zugeführt. Die Vorrichtung zum Fixieren der Falten umfasst ein elektrisches Heizelement 72 und Rollen 73 und 74, welche das gefaltete Band unter Spannung über die Fixiervorrichtung 71 leiten. Die Rollen 72,74 können der Faltvorrichtung zugeordnet oder separat angeordnet sein. Wie die Fig. 8 zeigt hat die Faltvorrichtung eine längliche sich verjüngende Form, die so gestaltet ist, dass das Band 14 am weiteren Ende 75 frei eingeführt wird und am schmäleren Ende 76 als auf die Etikettenlänge gefaltetes Band heraustritt.

Wie die Figuren 9 bis 11 zeigen, enthält die Faltvorrichtung eine Faltplatte 81 und eine Stützplatte 82. Die Faltplatte 81 ist an den Längsseiten mit einer Randpartie 83 versehen. Die Kontur der Stützplatte ist so ausgestaltet, dass die Stützplatte an der Unterseite der Faltplatte und innerhalb der Randpartie angeordnet ist, wobei zwischen den gegenüberliegenden Flächen jeweils ein Abstand vorgesehen ist, um das Band 14 mit den Figuren 12 zuführen. An der Schmalseite der Faltplatte ist ein Auflageabschnitt 84 für das gefaltete Band ausgebildet. Das Heizelement 72 ist an der Unterseite des Auflageabschnittes so befestigt, dass der Auflageabschnitt erwärmt wird und somit die Vorrichtung zum Fixieren der am Band ausgebildeten Falten bildet. Die Ausbildung der Randpartie ist in den Figuren 7 bis 9 dargestellt und wird nicht näher beschrieben.

Das Band 14 wird durch die Faltvorrichtung gezogen, wobei die Randbereiche entsprechend der Ausbildung der Randpartien 83 umgelegt werden. Nach dem Falten wird das Band über den erwärmten Auflageabschnitt gezogen, wobei die Falten fixiert werden.

Die Fig.12 zeigt eine Ausführung einer zweiten Schneidvorrichtung mit einer integrierten Packvorrichtung. Die Schneidvorrichtung enthält ein Paar von Messrollen 90, die mit der nicht dargestellten Steuervorrichtung verbunden ist, eine Führungsvorrichtung 91 mit einem Oberteil 92 und einem Unterteil 93, um das gefaltete Band zu führen, ein Schneidorgan 94, welches durch einen Antrieb 95 hin und her bewegt wird und mit dem Unterteil zusammenwirkt, um das Band entlang der zweiten Schneidkante zu schneiden und einen Führungsteil 96 für das Schneidorgan. Das Schneidorgan 94 kann mit einem Heizelement 97 versehen sein.

Bei dieser Schneidvorrichtung wird das gefaltete Band über die Messrollen 90 zugeführt, wobei die Messrollen nach Durchlauf einer vorbestimmten Bandlänge, welche der Länge des Etiketts entspricht die Zufuhr des Bandes unterbricht. Nachdem Abtrennen des Etiketts wird die Zufuhr wieder freigegeben.

Die Figur 13 zeigt eine Vorrichtung, die im Wesentlichen aus Messrollen 90, die mit einer nicht dargestellten Steuervorrichtung verbunden sind, einer thermischen oder Ultraschall - Schneidvorrichtung 101, einer Führungsvorrichtung 102 für das Band und einer Packvorrichtung 103 besteht. Die Schneidvorrichtung ist bekannt und ortsfest montiert. Die Führungsvorrichtung 102 enthält einen ortsfest montierten Unterteil 104 und einen Oberteil 105, der bezüglich dem Unterteil 104 verschoben werden kann. Am Oberteil ist eine Schneidkante an der Austrittsseite des Bandes und eine gerundete Partie an der Eintrittsseite des Bandes ausgebildet. Die Packvorrichtung 103 enthält einen Stempel 107, der mit der Schneidkante am oberteil zusammenwirkt, einen Antrieb 108 und eine Führung 109 für den Stempel. die einen Ansatz zur Aufnahme des Behälters 21 aufweist.

Bei dieser Vorrichtung wird das gefaltete Band über die Messrollen 90 zugeführt, wobei die Messrollen nach Durchlauf einer in der Steuervorrichtung vorgegebenen Bandlänge, welche der Länge des Etiketts entspricht die Zufuhr des Bandes unterbricht, so dass Etiketten mit gleicher Länge geschnitten werden.

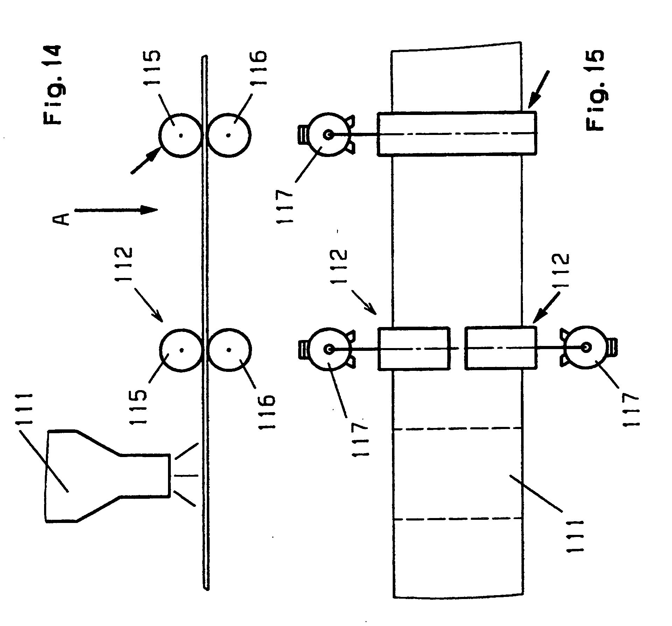

Die Figuren 14 und 15 zeigen eine Ausführung einer Vorrichtung zum Kontrollieren der Figur 12 des Etiketts und Ausrichten des Bandes. Die Vorrichtung enthält eine Einheit 111 zum Abtasten der Lage der Figur 12 des Etiketts, zwei erste Rollenpaare 112 und ein zweites Rollenpaar 113, die jeweils eine Antriebsrolle 115 und eine Gegenrolle 116 umfassen sowie Schrittmotoren 117, die mit der Antriebsrolle verbunden sind. Die Abtastvorrichtung und die Schrittmotoren sind mit einer nicht gezeigten Steuervorrichtung signalübertragend verbunden.

Bei dieser Vorrichtung werden mittels der Einheit 111 einerseits fehlerhafte Figuren 12 des Etiketts festgestellt und andererseits die Lage des Etiketts auf dem gefaltete Band abgetastet. Bei fehlerhafter Figur 12 wird das entsprechende Etikett nach dem Schneiden ausgeschieden. Bei korrekter Figur 12 und Lage des Etiketts wird das Band mittels synchron rotierenden ersten und zweiten Förderrollen zur Schneidvorrichtung gefördert. Treten Abweichungen von der korrekten Lage auf, so werden je nach Art der Abweichung die ersten Förderrollen mit unterschiedlichen Drehzahlen angetrieben und damit die Lage des Etiketts ausgerichtet und zentriert.

## Patentansprüche

1. Verfahren zum Herstellen von Etiketten in einem aus schmelzfähigen Fadenmaterial erzeugten Breitgewebe (11) in der Gewebetechnik mit einem Grundgewebe und mehreren Stickschüssen für die Figur, wobei das Breitgewebe (11) nach dem Weben mittels ersten Schneidvorrichtungen unter Bildung einer in Kettrichtung verlaufenden ersten Schneidkante (15) in eine Schar nebeneinander liegender Bänder (14) getrennt wird, **dadurch gekennzeichnet, daß** für jedes Band (14) eine Vorratsrollen (16) erzeugt wird und wobei online das Band von der Vorratsrolle (16) abgezogen, appretiert und mittels einer zweiten Schneidvorrichtung (33) im Grundgewebe unter Bildung einer zweiten Schneidkante (19) geschnitten wird, derart, dass gebrauchsfertige Etiketten (18) erzeugt werden.

2. Verfahren zum Herstellen von Etiketten in einem aus schmelzfähigen Fadenmaterial erzeugten Breitgewebe mit einem Grundgewebe und mehreren Stickschüssen für die Figur, wobei das Breitgewebe (11) eine Mehrzahl von Streifen (13) mit Figuren (12) aufweist und nach dem Weben mittels ersten Schneidvorrichtungen unter Bildung einer in Kettrichtung verlaufenden ersten Schneidkante (15) in eine Schar nebeneinander liegender, mindestens einen Streifen enthaltende Bänder (14) getrennt wird, **dadurch gekennzeichnet, daß** die Bänder aufgewickelt werden, und daß im Breitgewebe Streifen von mit in Schussrichtung ausgerichten Figuren gewoben werden und bei welchem online das Band (14) von einer Vorratsrolle (16) abgezogen, das Band (14) entlang der ersten Schneidkante gefaltet wird und mittels einer zweiten Schneidvorrichtung (45) im Grundgewebe unter Bildung einer in Schussrichtung verlaufenden zweiten Schneidkante (17) geschnitten wird, derart, dass gebrauchsfertige Etiketten (18) mit parallel zur zweiten Schneidkante bzw. Schussfäden ausgerichteter Figur erzeugt werden.

3. Verfahren nach Anspruch 1 oder 2, **dadurch gekennzeichnet, dass** das Band (14) vor dem Schneiden mittels Wärmebehandlung fixiert wird.

4. Verfahren nach Anspruch 1 oder 2, **dadurch gekennzeichnet, dass** das Band (14) vor dem Schneiden kontrolliert und schnittgenau ausgerichtet wird.

5. Verfahren nach einem der vorangehenden Ansprüche, **dadurch gekennzeichnet, dass** das Band (14) mechanisch, thermisch oder mit Ultraschall geschnitten wird.

6. Verfahren nach einem der vorangehenden Ansprüche, **dadurch gekennzeichnet, dass** das Band (14) an den ersten Schneidkanten (15) gefaltet wird.

7. Verfahren nach einem der vorangehenden Ansprüche, **dadurch gekennzeichnet, dass** das Band (14) parallel zu den ersten Schneidkanten (15) in der Mitte gefaltet wird.

8. Verfahren nach einem der vorangehenden Ansprüche, **dadurch gekennzeichnet, dass** das Band (14) vor dem Appretieren und/oder dem Fixieren gefaltet wird.

9. Verfahren nach einem der vorangehenden Ansprüche, **dadurch gekennzeichnet, dass** die Falten und vor dem Appretieren fixiert werden.

10. Verfahren nach Anspruch 1 oder 2, **dadurch gekennzeichnet, dass** die Falten mittels Wärme und/oder Druck fixiert werden.

11. Einrichtung zur Durchführung des Verfahrens nach einem der vorangehenden Ansprüche enthaltend online eine Vorrichtung (31) zur drehbeweglichen Aufnahme mindestens einer Vorratsrolle (16) mit dem die Etiketten aufweisende Band, eine Vorrichtung (32) zum Appretieren des Bandes und eine Vorrichtung (33,45) zum Schneiden des Bandes, um gebrauchsfertige Etiketten zu erzeugen.

12. Einrichtung nach Anspruch 11, welche online eine Vorrichtung (42) zum Falten des Bandes enthält.

13. Einrichtung nach Anspruch 11, welche online eine Vorrichtung (52,64) zum Thermofixieren enthält.

14. Einrichtung nach Anspruch 12, bei welcher die Vorrichtung (42) zum Falten der Vorrichtung (32,52) zum Appretieren und/oder der Vorrichtung (64) zum Thermofixieren vorgelagert ist.

15. Einrichtung nach Anspruch11 und 13, bei welcher die Vorrichtung (63) zum Trocknen der Vorrichtung (52) zum Appretieren nachgeordnet und der Vorrichtung (45) zum Schneiden vorgelagert ist.

16. Einrichtung nach Ansprüche 12, bei welcher die Vorrichtung (42) zum Falten der Vorrichtung (32) zum Appretieren und/oder der Vorrichtung (64) zum Thermofixieren nachgeordnet ist.

17. Einrichtung nach Anspruch 11 oder 13, bei welcher die Vorrichtung (42) zum Falten eine längliche, sich verjüngende Form aufweist, derart, dass das Band (14) am weiteren Ende (75) frei einführbar ist und am schmäleren Ende (76) als auf die Etikettenlänge gefaltetes Band heraustritt.

18. Einrichtung nach Anspruch 11 oder 12, welche online eine Vorrichtung (43,51) zum Fixieren der Falten enthält, welche der Vorrichtung (42) zum Falten nachgeordnet ist.

19. Einrichtung nach Anspruch 13, bei welcher die Vorrichtung (43,51) zum Fixieren in die Vorrichtung (42) zum Falten integriert ist

20. Einrichtung nach Anspruch 15, bei welcher die Vorrichtung zum Fixieren ein Heizelement (48) aufweist.

21. Einrichtung nach Anspruch 17, bei welcher die Vorrichtung (43,51) zum Fixieren eine Druckrolle aufweist, wobei die Druckrolle heizbar ist.

22. Einrichtung nach Anspruch 11, welche eine mechanische, eine thermische oder eine Ultraschall - Schneidvorrichtung enthält.

23. Einrichtung nach einem der Ansprüche 11 bis 22, welche online eine Vorrichtung zum Verpacken der gebrauchsfertigen Etiketten (18) enthält, die der Schneidvorrichtung (45) online nachgeordnet ist.

24. Einrichtung nach einem der Ansprüche 11 bis 23, welcher eine Vorrichtung (33) Schneiden des Bandes und zum Verpacken der gebrauchsfertigen Etiketten (18) aufweist.

25. Einrichtung nach einem der Ansprüche 11 bis 24, welche online eine Vorrichtung (34) zum Ausrichten und Kontrollieren des Bandes enthält.

26. Einrichtung nach Anspruch 25, bei welcher die Vorrichtung (34) zum Ausrichten und Kontrollieren der Schneidvorrichtung (33) unmittelbar vorgelagert ist.

## Claims

1. A method for the manufacture of labels in a broad weave produced in a meltable thread material using weaving technology with a ground fabric and a plurality of embroidery wefts for the figure, with the broad weave (11) being parted after the weaving by means of first cutting devices, while forming a first cut edge (15) that extends in the warp direction, into a group of bands (14) lying alongside one another, **characterised in that** a supply reel (16) is produced for each band (14) and the band is, online, drawn off from the supply reel (16), chemically finished and is cut by means of a second cutting apparatus (33) in the ground fabric while forming a second cut edge (19), such that labels (18) are produced that are ready for use.

2. A method for the manufacture of labels in a broad weave produced in a meltable thread material with a ground fabric and a plurality of embroidery wefts for the figure, with the broad weave (11) having a plurality of strips (13) with figures (12) and being parted after the weaving by means of first cutting devices, while forming a first cut edge (15) that extends in the warp direction, into a group of bands (14) lying alongside one another and containing at least one strip, **characterised in that** the bands are wound up and that strips of figures aligned in the weft direction are woven into the broad weave and wherein the band (14) is drawn off online from a supply reel (16), the band (14) is folded along the first cutting edge and is cut by means of a second cutting (54) apparatus in the ground fabric while forming a second cut edge (17) that extends in the weft direction, such that labels (18) are produced that are ready for use with figure aligned parallel to the second cut edge or to the weft threads, respectively.

3. A method according to claim 1 or claim 2, **characterised in that**, prior to the cutting, the band (14) is set by means of heat treatment.

4. A method according to claim 1 or claim 2, **characterised in that**, prior to the cutting, the band (14) is checked and aligned precisely for cutting.

5. A method according to one of the preceding claims, **characterised in that** the band (14) is cut mechanically, thermally, or with ultrasound.

6. A method according to one of the preceding claims, **characterised in that** the band (14) is folded at the first cut edges (15).

7. A method according to one of the preceding claims, **characterised in that** the band (14) is folded parallel to the first cut edges (15) at the centre.

8. A method according to one of the preceding claims, **characterised in that** the band (14) is folded prior to the chemical finishing and/or the setting.

9. A method according to one of the preceding claims, **characterised in that** the folds are set prior to the chemical finishing.

10. A method according to claim 1 or claim 2, **characterised in that** the folds are set by means of heat and/or pressure.

11. Apparatus for carrying out the method according to one of the preceding claims, containing online an apparatus (31) for the rotationally movable reception of at least one supply reel (16) with the band having the labels, an apparatus (32) for the chemical finishing of the band and an apparatus (33, 45) for the cutting of the band, to produce labels that are ready for use.

12. Apparatus according to claim 11, which contains online an apparatus (42) for the folding of the band.

13. Apparatus according to claim 11, which contains online an apparatus (52, 64) for the heat setting.

14. Apparatus according to claim 12 in which the apparatus (42) for the folding is positioned upstream of the apparatus (32, 52) for the chemical finishing and/or the apparatus (64) for the heat setting.

15. Apparatus according to claims 11 and 13 in which the apparatus (63) for the drying is positioned downstream of the apparatus (52) for the chemical finishing and upstream of the apparatus (45) for the cutting.

16. Apparatus according to claim 12 in which the apparatus (42) for the folding is positioned downstream of the apparatus (32) for the chemical finishing and/or the apparatus (64) for the heat setting.

17. Apparatus according to claim 11 or 13 in which the apparatus (42) for the folding has an elongate, tapering shape such that the band (14) can be freely inserted at the broader end (75) and emerges at the narrow end (76) as a band folded to label length.

18. Apparatus according to claim 11 or 12 which contains online an apparatus (43, 51) for the setting of the folds, which is arranged downstream of the apparatus (42) for the folding.

19. Apparatus according to claim 13 in which the apparatus (43, 51) for the setting is integrated into the apparatus (42) for the folding.

20. Apparatus according to claim 15 in which the apparatus for the setting has a heating element (48).

21. Apparatus according to claim 17 in which the apparatus (43, 51) for the setting has a pressure roller, with the pressure roller being heatable.

22. Apparatus according to claim 11 which contains a mechanical, thermal or ultrasonic cutting apparatus.

23. Apparatus according to one of the claims 11 to 22 which contains online an apparatus for the packaging of the labels (18) that are ready for use, which is arranged online downstream of the cutting apparatus (45).

24. Apparatus according to one of the claims 11 to 23 which has an apparatus (33) for the cutting of the band and for the packaging of the labels (18) that are ready for use.

25. Apparatus according to one of the claims 11 to 24, which contains online an apparatus (34) for the alignment and the checking of the band.

26. Apparatus according to claim 25 in which the apparatus (34) for the alignment and the checking is positioned directly upstream of the cutting apparatus (33).

## Revendications

1. Procédé de fabrication d'étiquettes dans un tissu large produit selon la technique des tissus en matériau de fil fondant avec un tissu de base et plusieurs fils de trame à broder pour le motif, le tissu large (11) étant séparé après le tissage en un ensemble de bandes (14) juxtaposées, au moyen de premiers dispositifs de découpe, avec formation d'une première arête de découpe (15) qui s'étend dans la direction de la chaîne, **caractérisé en ce qu'**un rouleau d'alimentatrion (16) est produit pour chaque bande (14) et que, en ligne, la bande est dévidée du rouleau d'alimentatrion (16), apprêtée et coupée dans le tissu de base au moyen d'un deuxième dispositif de découpe (33) avec formation d'une deuxième arête de découpe (19), de façon à produire des étiquettes (18) prêtes à l'emploi.

2. Procédé de fabrication d'étiquettes dans un tissu large produit en matériau de fil fondant avec un tissu de base et plusieurs fils de trame à broder pour le motif, le tissu large (11) comportant plusieurs bandes (13) pourvues de motifs (12) et étant séparé après le tissage en un ensemble de bandes (14) juxtaposées et comprenant au moins une bande, au moyen de premiers dispositifs de découpe, avec formation d'une première arête de découpe (15) qui s'étend dans la direction de la chaîne, **caractérisé en ce que** les bandes sont enroulées et que des bandes pourvues de motifs alignés dans la direction de la trame sont tissées dans le tissu large, et **en ce que**, en ligne, la bande (14) est dévidée d'un rouleau d'alimentatrion (16), la bande (14) est pliée le long de la première arête de découpe et est coupée dans le tissu de base au moyen d'un deuxième dispositif de découpe (54) avec formation d'une deuxième arête de découpe (17) qui s'étend dans la direction de la chaîne, de façon à produire des étiquettes (18) prêtes à l'emploi et dont le motif est respectivement aligné parallèlement à la deuxième arête de découpe et aux fils de chaîne.

3. Procédé selon la revendication 1 ou 2, **caractérisé en ce qu'**avant d'être coupée la bande (14) est fixée par traitement thermique.

4. Procédé selon la revendication 1 ou 2, **caractérisé en ce qu'**avant d'être coupée la bande (14) est vérifiée et dressée avec la précision nécessaire au découpage.

5. Procédé selon l'une des revendications précédentes, **caractérisé en ce que** la bande (14) est coupée mécaniquement, thermiquement ou aux ultrasons.

6. Procédé selon l'une des revendications précédentes, **caractérisé en ce que** la bande (14) est pliée selon la première arête de découpe (15).

7. Procédé selon l'une des revendications précédentes, **caractérisé en ce que** la bande (14) est pliée en son milieu parallèlement aux premières arêtes de découpe (15).

8. Procédé selon l'une des revendications précédentes, **caractérisé en ce que** la bande (14) est pliée avant l'apprêtage et/ou le fixage.

9. Procédé selon l'une des revendications précédentes, **caractérisé en ce que** les plis sont fixés avant l'apprêtage.

10. Procédé selon la revendication 1 ou 2, **caractérisé en ce que** les plis sont fixés au moyen de chaleur et/ou de pression.

11. Dispositif de mise en oeuvre du procédé selon l'une des revendications précédentes, comportant, en ligne, un dispositif (31) de réception mobile en rotation d'au moins un rouleau d'alimentation (16) comportant la bande munie des étiquettes, un dispositif d'apprêtage (32) de la bande et un dispositif de découpe (33, 45) de la bande, de façon à produire des étiquettes prêtes à l'emploi.

12. Dispositif selon la revendication 11, lequel comporte en ligne un dispositif de pliage (42) de la bande.

13. Dispositif selon la revendication 11, lequel comporte en ligne un dispositif de fixage thermique (52, 64).

14. Dispositif selon la revendication 12, dans lequel le dispositif de pliage (42) est disposé en amont du dispositif d'apprêtage (32, 52) et/ou du dispositif de fixage thermique (64).

15. Dispositif selon les revendications 11 et 13, dans lequel le dispositif de séchage (63) est disposé en aval du dispositif d'apprêtage (52) et en amont du dispositif de découpe (45).

16. Dispositif selon la revendication 12, dans lequel le dispositif de pliage (42) est disposé en aval du dispositif d'apprêtage (32) et/ou du dispositif de fixage thermique (64).

17. Dispositif selon la revendication 11 ou 13, dans lequel le dispositif de pliage (42) présente une forme allongée et qui va en se rétrécissant de sorte que la bande (14) puisse être insérée librement à l'extrémité plus large (75) et émerge à l'extrémité plus étroite (76) en tant que bande pliée à la longueur de l'étiquette.

18. Dispositif selon la revendication 11 ou 12, lequel comporte en ligne un dispositif de fixage des plis (43, 51), lequel est disposé en aval du dispositif de pliage (42).

19. Dispositif selon la revendication 13, dans lequel le dispositif de fixage (43, 51) est intégré au dispositif de pliage (42).

20. Dispositif selon la revendication 15, dans lequel le dispositif de fixage comporte un élément de chauffage (48).

21. Dispositif selon la revendication 17, dans lequel le dispositif de fixage (43, 51) comporte un rouleau de pression, le rouleau de pression pouvant être chauffé.

22. Dispositif selon la revendication 11, lequel comporte un dispositif de découpe mécanique, thermique ou à ultrasons.

23. Dispositif selon l'une des revendications 11 à 22, lequel comporte en ligne un dispositif d'emballage des étiquettes (18) prêtes à l'emploi qui est disposé en ligne en aval du dispositif de découpe (45).

24. Dispositif selon l'une des revendications 11 à 23, lequel comporte un dispositif de découpe (33) de la bande et d'emballage des étiquettes (18) prêtes à l'emploi.

25. Dispositif selon l'une des revendications 11 à 24, lequel comporte en ligne un dispositif (34) d'alignement et de vérification de la bande.

26. Dispositif selon la revendication 25, dans lequel le dispositif (34) d'alignement et de vérification est disposé immédiatement en amont du dispositif de découpe (33).
